# EUROPÄISCHE PATENTSCHRIFT

(11) **EP 2 445 329 B1**
(45) Veröffentlichungstag und Bekanntmachung des Hinweises auf die Patenterteilung: **19.08.2015**
(21) Anmeldenummer: 10723577.2
(22) Anmeldetag: 28.05.2010
(51) Int. Cl.: A01B 15/06

(54) **BODENBEARBEITUNGSWERKZEUG**
SOIL WORKING TOOL
OUTIL DE TRAVAIL DU SOL

(30) Priorität: 23.06.2009 DE 102009029894
(43) Veröffentlichungstag der Anmeldung: 02.05.2012
(60) Teilanmeldung: 15175618.6
(73) Patentinhaber: Betek GmbH & Co. KG, 78733 Aichhalden (DE)
(72) Erfinder: KRAEMER, Ulrich, 77709 Wolfach (DE); SMEETS, Florian, 72270 Baiersbronn (DE)
(74) Vertreter: Fleck, Hermann-Josef
(86) Internationale Anmeldenummer: PCT/EP2010/057392
(87) Internationale Veröffentlichungsnummer: WO 2010/149464

(56) Entgegenhaltungen:
- WO-A2-2008/000989
- DE-A1- 2 655 792

## Beschreibung

Die Erfindung betrifft ein Bodenbearbeitungswerkzeug für eine landwirtschaftliche Maschine, insbesondere Pflugspitze, Pflugschar oder Grubberspitze mit einem Träger, der einen Schneidbereich mit einer Schneidkante aufweist, wobei im Schneidbereich ein oder mehrere Hartstoffelemente angeordnet sind.

Aus dem Stand der Technik sind vielfältige Ausführungsvarianten von Pflugscharen und Grubberwerkzeugen bekannt. Traditionell werden beispielsweise Pflugschare aus einem Eisenmaterial geschmiedet. Dabei musste der Werkstoff so beschaffen sein, dass er ausreichend zäh ist, damit er bei stoßartigen Belastungen, beispielsweise durch einen auftreffenden Stein nicht bricht. Zudem war eine ausreichende Härte gefordert, um dem abrasiven Verschleiß zu widerstehen. Da diese Eigenschaften nicht immer optimal gepaart auftreten, wurden im Schneidbereich des Trägers Schneidelemente aus Hartstoff, beispielsweise aus Hartmetall aufgebracht.

Damit konnte eine Standzeitverlängerung erreicht werden. Ein Ausfall tritt bei solchen Werkzeugformen meist dann ein, wenn infolge des abrasiven Angriffs des abgetragenen Materials das Trägermaterial im Bereich hinter dem Hartstoffelement ausgewaschen wird. Dann fehlt die erforderliche Abstützung und das Hartstoffelement bricht ab.

Die DE 26 55792 offenbart ein Bodenbearbeitungswerkzeug mit einer keramischen Schneide und einem Klemmstück. Mittels einer am Klemmstück angreifenden Schraube wird die keramische Schneide mit einem Träger verspannt.

Die WO 2008/000989 A2 offenbart eine Pflugschar bei der an einen gekürzten Scharträger ein aktives Element angebaut ist, das eine Schneidspitze bildet.

Es ist Aufgabe der Erfindung, ein Bodenbearbeitungswerkzeug der eingangs erwähnten Art zu schaffen, das eine optimierte Standzeit aufweist.

Diese Aufgabe wird mit den Merkmalen des Anspruches 1 gelöst.

Erfindungsgemäß wird die Funktion des Hartstoffelementes erweitert und seine Geometrie so gestaltet, dass es auch die Schneidkante bildet. Damit wird eine deutliche Standzeitverlängerung erreicht. Zudem wird der Auswaschungseffekt infolge des abrasiven Angriffs des abgetragenen Materials deutlich verringert. Eine weitere Verbesserung ist dadurch erreicht, dass das Schneidelement ein schenkelartiges Befestigungsstück aufweist, das in Vorschubrichtung gerichtet ist, und dass rückseitig entgegengesetzt zur Vorschubrichtung abstehend ein Ansatz an dem Schneidelement angeformt ist. Mit dem Ansatz kann der an die Schneidkante anschließende Bereich des Trägers abgedeckt und vor Auswaschung geschützt werden. Dies führt zusätzlich zu einer deutlichen Standzeiterhöhung. Zudem wird dabei der Vorteil erreicht, dass die Standzeiten des Schneidelementes und des Trägers aufeinander abgestimmt werden können. Damit lässt sich der erforderliche Materialeinsatz für das teure Hartstoffmaterial optimieren.

Wenn vorgesehen ist, dass der Träger im Schneidbereich eine Aufnahme aufweist, in der das Schneidelement mit dem Befestigungsstück stoffschlüssig festgelegt ist, und dass das Schneidelement eine Ableitfläche aufweist, die oberflächenbündig in die Vorderseite des Trägers übergeht, dann kann ein guter Abfluss des abgetragenen Materials gewährleitstet werden. Das Schneidelement kann mit dem Träger beispielsweise verlötet oder verklebt werden.

Die Schneidelemente sind in der Aufnahme geschützt untergebracht.

Eine besonders bevorzugte Erfindungsausgestaltung ist derart, dass das Schneidelement die gerundete Schneidkante bildet. Die gerundete Schneidkante sorgt für einen guten Werkzeugeingriff in den Boden, wobei aufgrund der Werkstoffeigenschaften des Hartwerkstoffes beispielsweise Hartmetall ein Nachschärfeeffekt und der Schutz vor Ausbruch eintritt, was für gleich bleibende Arbeitsergebnisse sorgt.

Dabei kann es insbesondere vorgesehen sein, dass der Verrundungsradius der Schneidkante im Bereich zwischen 0,1 mm und 15 mm liegt. Bei diesen Geometrien erfolgt ein scharfkantiger Werkzeugeingriff, wobei gleichzeitig die Gefahr eines Schneidenbruchs minimiert ist und bei Hartmetall ein optimaler Nachschärfeeffekt stattfindet.

Um die erforderliche Eingriffskraft und mithin die Antriebsleistung der Zugmaschine möglichst zu minimieren und den Eingriffswinkel des Werkzeuges sicher zu stellen kann es vorgesehen sein, dass das Schneidelement entgegengesetzt zur Vorschubrichtung eine gegenüber der Vorschubrichtung geneigte Freifläche bildet.

Besonders gute Ergebnisse haben sich über die gesamte Standzeit des Schneidelementes dann gezeigt, wenn vorgesehen ist, dass die Freifläche im Bereich zwischen α = 20° bis α = 70 ° gegenüber der Vorschubrichtung geneigt ist.

Eine einfache Werkzeuggeometrie ergibt sich dadurch, dass die gerundete Schneidkante einen Übergang zwischen einer vorderseitigen Schneidfläche und der rückseitigen Freifläche bildet.

Eine besonders bevorzugte Erfindungsvariante ist dergestalt, dass das Schneidelement mit einem Stützabschnitt des Ansatzes auf einer Gegenfläche des Trägers abgestützt ist. Auf diese Weise entsteht eine verbesserte Kraftableitung in den Träger. Damit wird eine weiter materialoptimierte Geometrie des Schneidelementes möglich. Um das Bodenbearbeitungswerkzeug einfach fertigen zu können, ist es denkbar, dass der Träger im Schneidbereich eine Ausnehmung in Form einer Ausfräsung aufweist, in der das oder die Schneidelemente aufgenommen sind.

Wenn vorgesehen ist, dass zwei oder mehrere Schneidelemente zumindest einen Teil der Schneidkanten bilden, wobei die Schneidelemente quer zur Vorschubrichtung nebeneinander angeordnet sind, dann werden über die Aufteilung der Schneidkante auf mehrere Elemente die Spannungen im Hartmetall verringert und damit das Bruchrisiko des Hartmetalls deutlich verringert.

Ein zusätzlicher Verschleißschutz kann dadurch erreicht werden, dass im Bereich der Vorderseite des Trägers eine oder mehrere Hartstoffabdeckungen angeordnet sind.

Dabei ist es vorteilhaft, dass die Hartstoffabdeckungen in Ausnehmungen des Trägers eingesetzt sind. Die Hartstoffabdeckungen sind in den Ausnehmungen gegen den Angriff von Querkräften des abgetragenen Materials geschützt.

Die Erfindung wird im Folgenden anhand von in den Zeichnungen dargestellten Ausführungsbeispielen näher erläutert. Es zeigen:
- Figur 1: in perspektivischer Frontansicht eine als Bearbeitungswerkzeug ausgebildete Pflugschar,
- Figur 2: eine der Figur 1 entnommene Detaildarstellung in Seitenansicht und im Schnitt,
- Figur 3: die Pflugschar gemäß Figur 1 in Ansicht von hinten,
- Figur 4: ein Schneidelement in perspektivischer Rückansicht,
- Figur 5: das Schneidelement gemäß Figur 4 in Seitenansicht,
- Figur 6: das Schneidelement gemäß Figur 4 in Ansicht von hinten,
- Figur 7: eine weitere Ausgestaltung einer Pflugschar in perspektivischer Frontansicht,
- Figur 8: die Pflugschar gemäß Figur 7 in Seitenansicht,
- Figur 9: eine dritte Ausgestaltungsvariante einer Pflugschar in perspektivischer Frontansicht,
- Figur 10: eine Detaildarstellung der Pflugschar gemäß Figur 9 in Seitenansicht und im Schnitt,
- Figur 11: die Pflugschar gemäß Figur 9 in perspektivischer Rückansicht,
- Figur 12: eine perspektivische Frontansicht einer Grubberspitze,
- Figur 13: eine Detaildarstellung der Grubberspitze gemäß Figur 12 in Seitenansicht und im Schnitt,
- Figur 14: die Grubberspitze gemäß Figur 12 in perspektivischer Rückansicht und
- Figuren 15 bis 37: verschiedene Ausführungsvarianten eines Schneidelementes

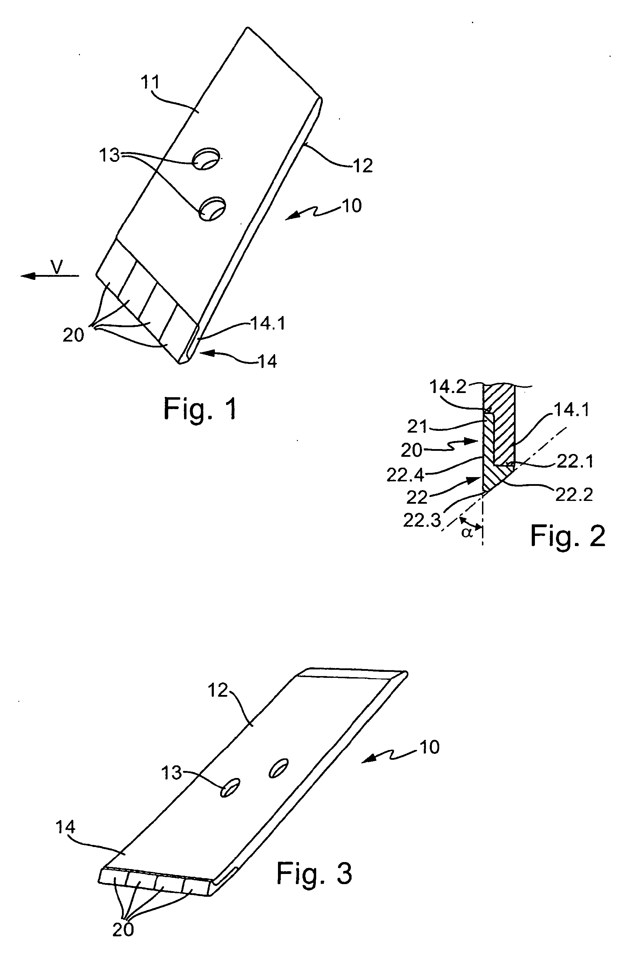

Figur 1 zeigt eine Pflugspitze mit einem Träger 10 als Schmiede-, Brenn-, Sinterstahl-, Gussteil o. ä., bestehend aus einem zähelastischen Werkstoff. Der Träger 10 weist eine Vorder- und eine Rückseite 11, 12 auf und ist von zwei Befestigungsaufnahmen durchbrochen, die zur Befestigung an einem Pflug dienen. Am unteren freien Ende des Trägers 10 ist ein Schneidbereich 14 gebildet, dessen Gestaltung der Figur 2 näher entnehmbar ist. Wie diese Darstellung veranschaulicht, besitzt der Träger 10 einen Ansatz 14.1, der zungenförmig das freie Ende des Trägers 10 bildet. Im Bereich der Vorderseite 11 bildet der Ansatz 14.1 eine Ausnehmung 14.2 in Form einer Ausfräsung. Dabei bildet die Ausnehmung 14.2 eine ebene in Vorschubrichtung gerichtete Auflagefläche für Schneidelemente 20.

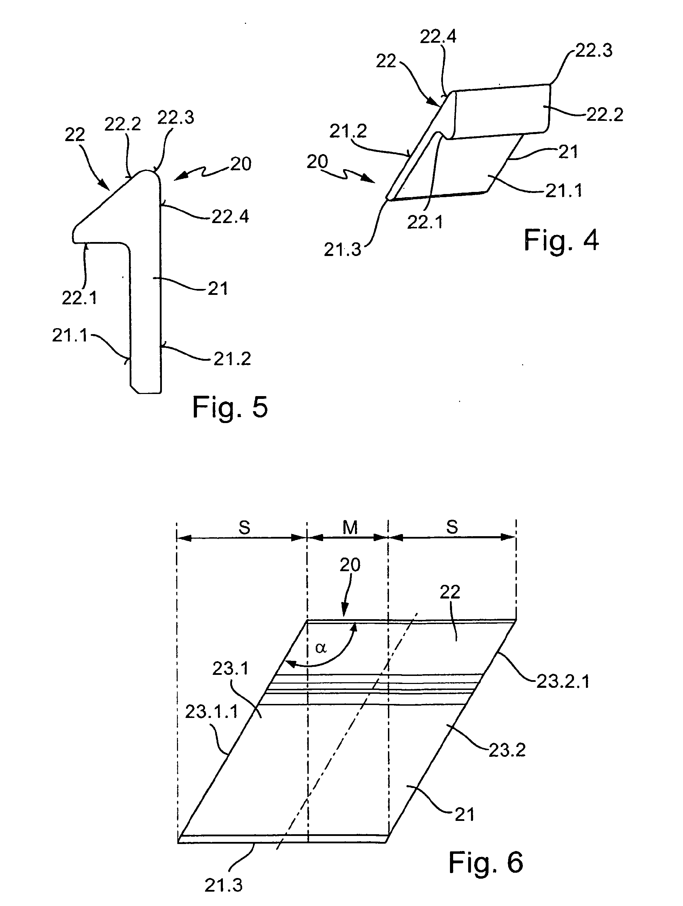

Die Gestaltung des Schneidelementes 20 lässt sich näher den Figuren 4 bis 6 entnehmen. Das Schneidelement 20 ist im Wesentlichen L-förmig ausgestaltet und weist ein schenkelartiges Befestigungsstück 21 auf, an das im Winkel ein Ansatz 22 anschließt. Dabei steht der Ansatz 22 rückseitig, also entgegengesetzt zur Vorschubrichtung V an dem Befestigungsstück 21 ab.

Der Ansatz 22 hat einen Stützabschnitt 22.1 in Form einer ebenen Fläche. Diese steht im Winkel zu einer rückseitigen Anlagefläche 21.1 des Befestigungsstückes 21. Vorzugsweise schließen die Anlagefläche 21.1 und der Stützabschnitt 22.1 zur optimierten Kraftableitung einen Winkel im Bereich zwischen 120° und 10° ein. Das Befestigungsstück 21 bildet frontseitig eine ebene Ableitfläche 21.2, die in eine Schneidfläche 22.4 des Ansatzes 22 bündig übergeht. Die Schneidfläche 22.4 ihrerseits geht in eine Schneidkante 22.3 über. Die Schneidkante 22.3 bildet einen Übergangsbereich zwischen der Schneidfläche 22.4 und einer rückseitigen Freifläche 22.2. Die Freifläche 22.2 steht im Winkel zu der Schneidfläche 22.4, wobei für die Schneidkante bei fortschreitendem Verschleiß ein zuverlässiger Nachschärfeeffekt dann erreicht werden kann, wenn der Winkel im Bereich zwischen 0° und 179° gewählt ist. Der Verrundungsradius der Schneidkante 22.3 ist geeignet gewählt, um bei ausreichender Schneidstabilität einen scharfen Werkzeugeingriff zu gewährleisten.

Wie Figur 6 erkennen lässt, hat das Schneidelement 20 die Form eines Parallelogramms. Dabei wird ein Mittenbereich M und zwei Seitenbereiche S gebildet. Im vorliegenden Beispiel sind die Seitenbereiche S derart an den Mittenbereich M angeschlossen, dass zwischen der oberen horizontalen Begrenzungslinie der Schneidkante 22.3 und einer Schneidenfläche 23.1.1 bzw. 23.1.2 ein Schneidwinkel im Bereich zwischen α > = 90 und < 150° eingeschlossen wird. Diese Schneidwinkel sind besonders für die Bodenbearbeitung optimal.

Wie die Figur 1 erkennen lässt, sind zur Ausbildung des Schneidbereichs 14 vier Schneidelemente 20 quer zu Vorschubrichtung V nebeneinander liegend in die Ausnehmung 14.2 eingelötet. Dabei liegt das Befestigungsstück 21 mit seiner Anlagefläche 21.1 auf der ebenen Frontfläche der Ausnehmung 14.2 auf. Die Ableitfläche 21.2 geht bündig in die Vorderseite 11 des Trägers 10 über. Die Ausnehmung 14.2 ist so ausgebildet, dass die Befestigungsstücke 21 aller Schneidelemente 20 vollflächig unterfangen sind. Die Ansätze 22 liegen mit ihren Stützabschnitten 22.1 auf der freien Stirnseite der Ansätze 14.1 zur optimierten Befestigung unter Vermittlung von Lotmaterial auf, so dass sich eine Abstützung und gleichzeitig ein Kantenschutz und Schutz vor Auswaschung ergibt.

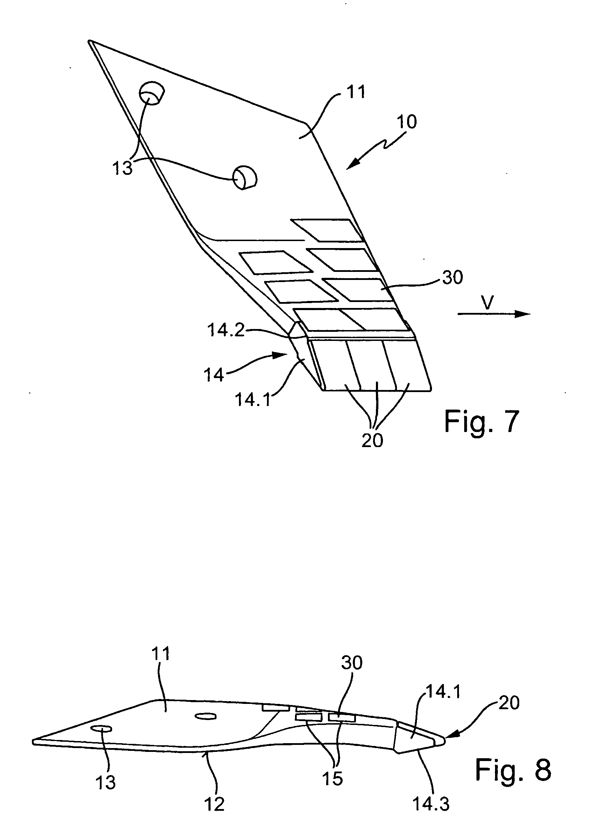

In den Figuren 7 und 8 ist eine weitere Ausgestaltungsvariante einer Pflugschar gezeigt. Diese weist prinzipiell einen ähnlichen Aufbau wie die Pflugschar gemäß Figur 1 bis 3 auf, weshalb auf die obigen Ausführungen verwiesen und nur auf die Unterschiede eingegangen werden muss. Im Schneidbereich 14 kommen drei nebeneinander angeordnete Schneidelemente 20 gemäß Figuren 4 bis 6 zum Einsatz. Wie Figur 8 erkennen lässt, weist die Rückseite 12 des Trägers 10 eine Anschlussfläche 14.3 auf, die winklig zur Ausnehmung 14.2 und vorzugsweise entsprechend dem Winkel der Freifläche 22.2 des Schneidelementes 20 angestellt ist.

Auf diese Weise ergibt sich eine Verdickung und damit Aussteifung des Ansatzes 14.1. Zur Verbesserung der Verschleißeigenschaften sind in die Vorderseite 11 Ausnehmungen 15 eingearbeitet und in diese Hartstoffabdeckungen 30, bestehend aus Hartmetall oder einem anderen härteren Werkstoff befestigt durch Löten, Kleben o. ä.. Dabei gehen die Hartstoffabdeckungen 30 oberflächenbündig in die Vorderseite 11 über.

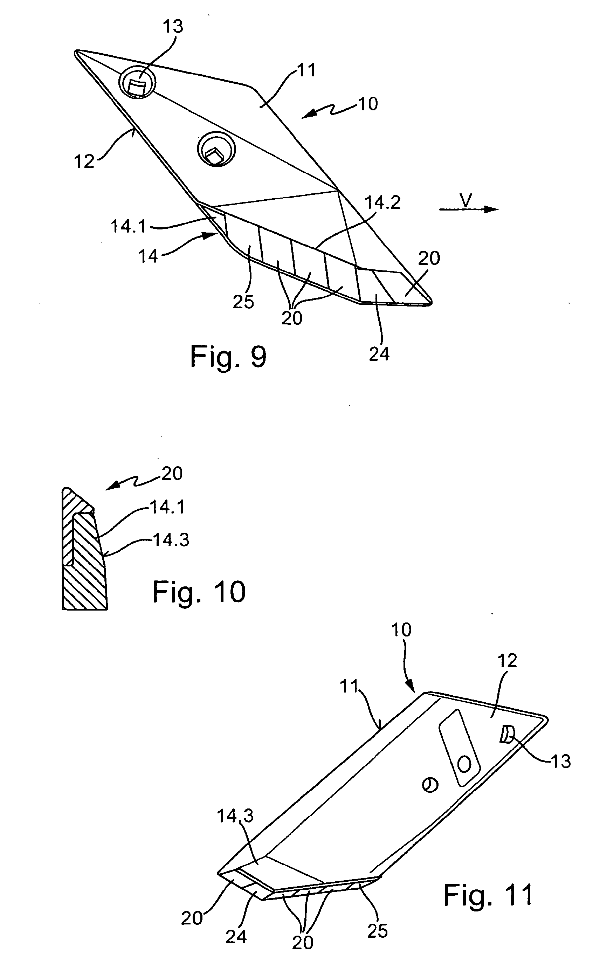

Die Figuren 9 bis 11 zeigen eine weitere Ausgestaltung einer Pflugschar. Zur Vermeidung von Wiederholungen wird auf die übereinstimmenden Merkmale der Pflugschare gemäß Figuren 1 bis 3 bzw. 7 und 8 verwiesen und nachfolgend nur auf die Unterschiede eingegangen.

Wie die Figur 9 erkennen lässt, ist der Ansatz 14.1 und damit die Ausnehmung 14.2 winklig ausgestaltet. In diese Ausnehmung 14.2 sind beginnend von dem in Vorschubrichtung V gesehenen vorderen Schneidbereich zunächst ein Schneidelement 20 gemäß Figuren 4 bis 6, dann ein Übergangselement 24, anschließend wieder drei Schneidelemente 20 gemäß Figuren 4 bis 6 und abschließend ein Endstück 25 eingelötet.

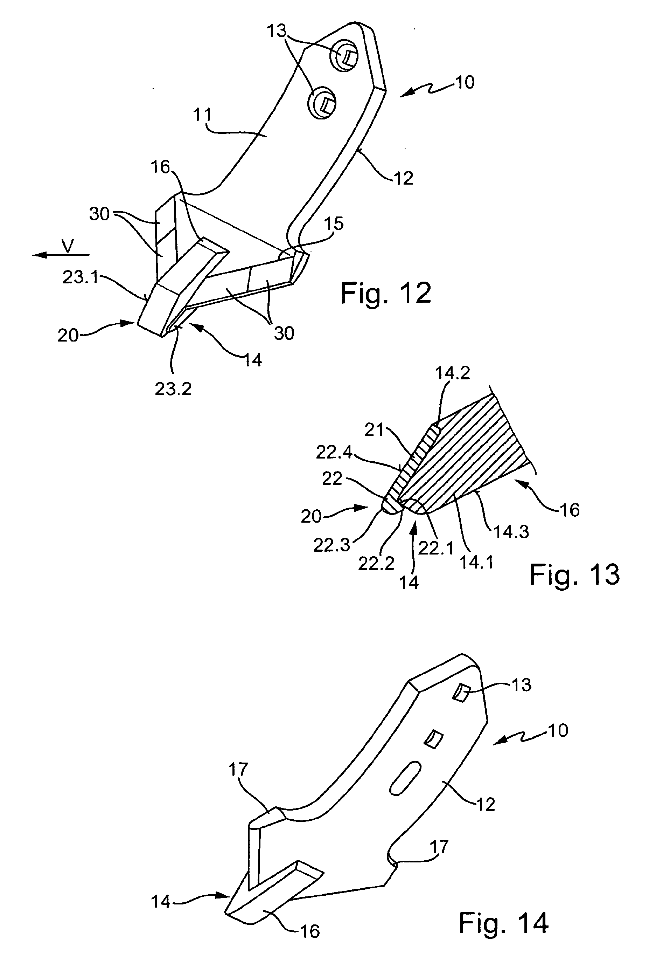

Die Figuren 12 bis 14 zeigen als Bodenbearbeitungswerkzeug eine Grubberspitze. Dieser weist wieder einen Träger 10 mit Vorder- und Rückseite 11 und 12 sowie Befestigungsaufnahmen 13 auf. Der Träger 10 ist pfeilförmig ausgestaltet und hat einen abstehenden Schneidenträger 16, an den sich seitlich zwei Ausleger 17 anschließen. Der Schneidenträger 16 ist im Bereich seines freien Endes wieder mit einem Schneidelement 20 belegt, das in eine Ausnehmung 14.2 eingelötet oder eingeklebt o. a. ist.

Das Schneidelement 20 entspricht im Wesentlichen der Gestaltung des Schneidelementes 20 gemäß Figuren 4 bis 6, wobei jedoch keine parallelogrammartige Geometrie, sondern eine zur Mittelquerebene symmetrische Gestalt mit zwei zueinander parallelen Seiten 23.1, 23.2 gewählt ist.

Der Ansatz 22 ist ebenfalls leicht verändert und erstreckt sich weniger weit entgegengesetzt zur Vorschubrichtung als der Ansatz 22 gemäß Figuren 4 bis 6.
Zur Panzerung der Ausleger 17 sind diese in ihren an den Schneidenträger 16 anschließenden Kantenbereichen mit aufgelöteten oder aufgeklebten o. ä. Hartstoffabdeckungen versehen.

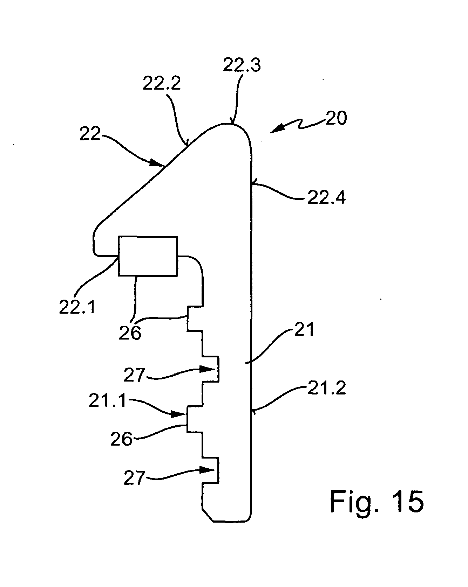

In Figur 15 ist eine weitere Ausgestaltungsvariante eines Schneidelementes 20 dargestellt. Dabei ist das Schneidelement 20 im Bereich seines Stützabschnitts 22.1 und seiner Anlagefläche 21.1 mit Vorsprüngen 26 und eingetieften Ausnehmungen 27 versehen.

Die Vorsprünge 26 dienen dabei zum formschlüssigen Eingriff in korrespondierende Ausnehmungen des Trägers 10. In die Ausnehmungen 27 sind Vorsprünge des Trägers 10 formschlüssig eingesetzt. Auf diese Weise ergibt sich eine stabile, da formschlüssige, Festlegung des Schneidelementes 20 am Träger 10. Zudem kann das Schneidelement 20 bei der Fertigung passgenauer gegenüber dem Träger 10 ausgerichtet werden. Beim Befestigen (Löten, Kleben etc.) ist weiterhin ein Verschieben des Schneidelementes 20 in Formschlussrichtung unterbunden. Die Ausnehmungen 27 können, wie in Figur 15 dargestellt, zur vereinfachten Montage gestuft oder sich zum Tragteil 70 kontinuierlich erweiternd ausgestaltet sein.

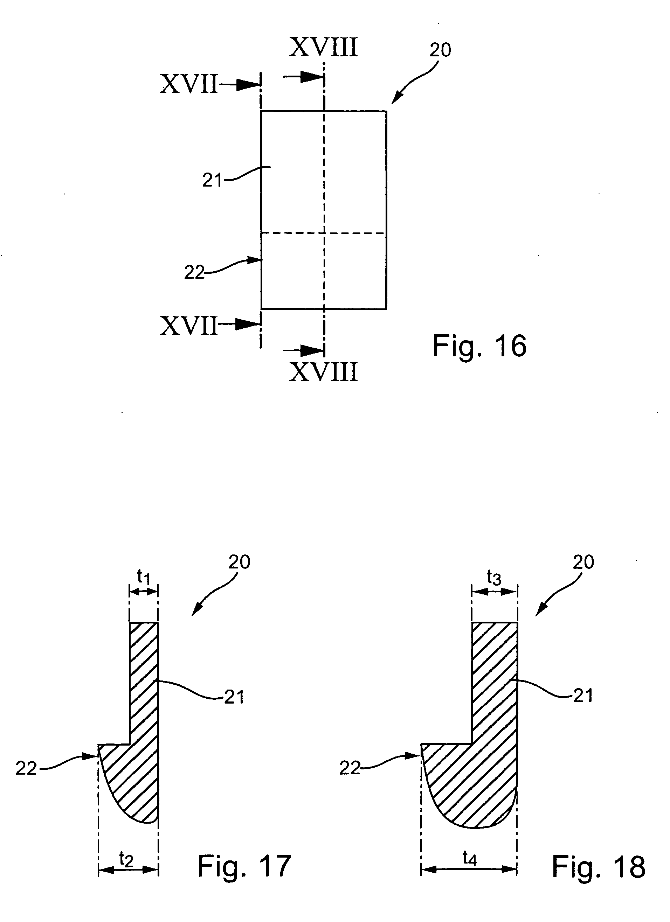

Die Figuren 16 bis 18 zeigen eine weitere Ausgestaltungsvariante eines Schneidelementes 20. Dieses weist wieder ein Befestigungsstück 21 mit einem Ansatz 22 auf und ähnelt prinzipiell dem Werkzeugaufbau gem. Figuren 4 bis 6.

Wie die Figuren 17 und 18 veranschaulichen, die das Schneidelement 20 im Schnitt zeigen, verändert sich die Querschnittsgestaltung des Schneidelementes 20 kontinuierlich, wobei die Materialstärke des Befestigungsstückes 21 und des Ansatzes in Figur 16 von links nach rechts gesehen zunimmt. Dies wird in den Figuren 17 und 18 durch die Materialstärkenangaben t₁ - t₄ veranschaulicht. Dabei gilt t₃ > t₁ und t₄ > t₂.

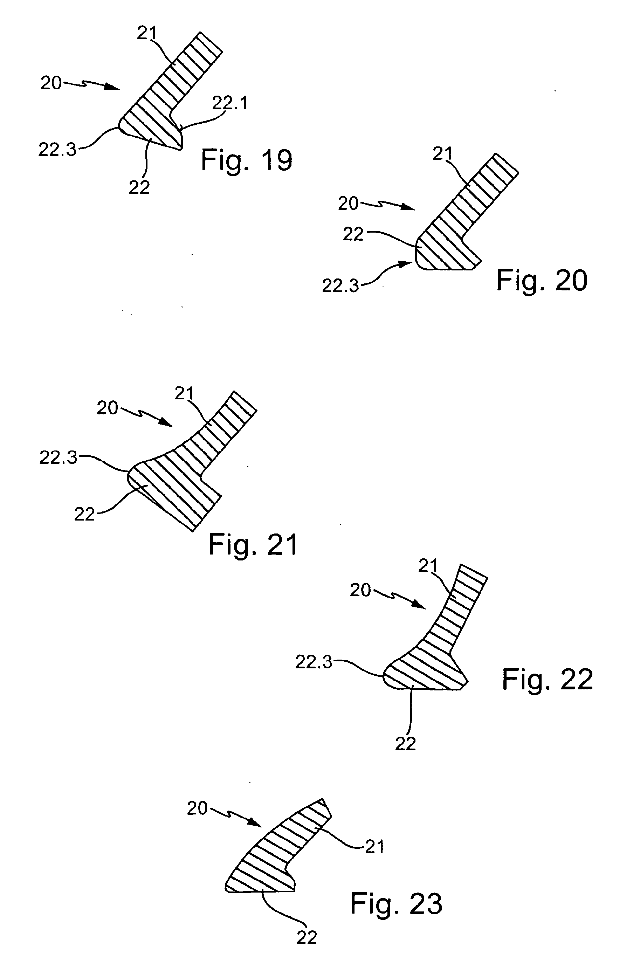

In den Figuren 19 bis 23 sind weitere Querschnittsformen für Schneidelemente mit einem Befestigungsstück 21 und einem Ansatz 22 gezeigt.

Figur 19 veranschaulicht nochmals die gerundete Schneidkante 22.3, die beispielsweise einen Radius im Bereich zwischen 0,1 und 10 mm aufweisen kann. Der Stützabschnitt 22.1 ist vorliegend konvex gewölbt.

Figur 20 zeigt, dass anstelle der einen gerundeten Schneidkante 22.3 auch eine aus Polygonabschnitten zusammengesetzte Schneidkante 22.3 verwendet sein kann. Diese hat für raue Betriebsbedingungen eine größere Bruchstabilität.

Gemäß Figur 21 und Figur 22 kann die Vorderseite des Schneidelementes 20 einen konkaven Bereich aufweisen, der für einen scharfkantigen Werkzeugeingriff in die Schneidkante 22.3 übergeht.

Figur 22 zeigt, dass der eingeschlossene Winkel zwischen dem Stützabschnitt 22.1 und der Anlagefläche 21.1 auch abweichend von 90° sein kann. Ausreichend gute Kraftüberleitungen zwischen dem Schneidelement 20 und dem Träger 10 sind bei Winkelbereichen zwischen 15° und 170° gegeben.

Figur 23 veranschaulicht, dass das Befestigungsstück 21 auch einen konvex gewölbten Frontseitenbereich bildet. Dadurch ergibt sich eine größere Materialstärke, was zu größerer Stabilität und Verscheißstandzeit führt.

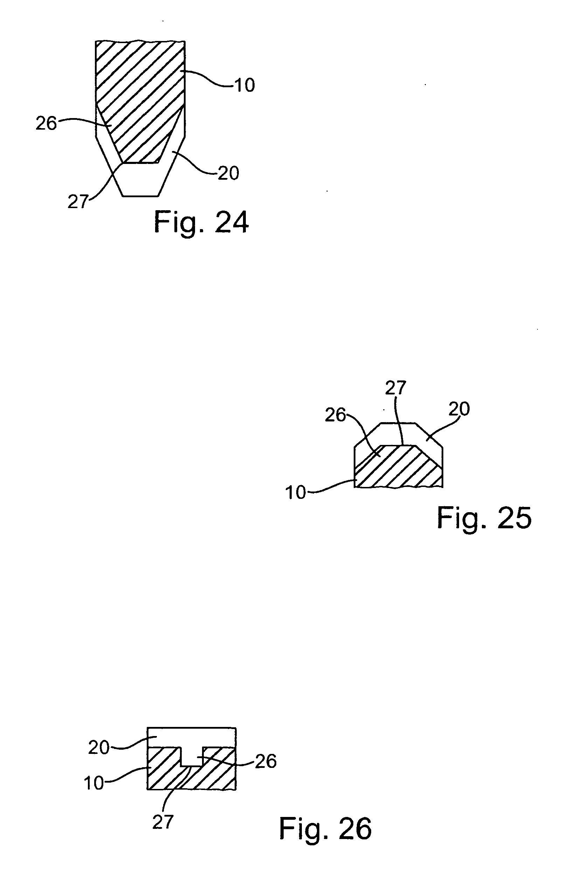

In den Figuren 24 bis 26 sind mögliche Ausgestaltungen der Kontaktzone zwischen dem Träger 10 und dem Scheidelement 20 gezeigt. Die Kontaktzone wird dabei von dem Stützabschnitt 21.1 und der zugeordneten Fläche der Ausnehmung 14.2 und/oder dem Stützabschnitt 22.1 und der zugeordneten Stirnfläche des Trägers 10 gebildet. Wie die Zeichnungen zeigen, wird die Kontaktzone von (formschlüssig) ineinander zahnenden Vorsprüngen 26 und Aufnahme 27 gebildet. Die Vorsprünge 26 und Aufnahmen 27 sind dabei spiegelbildlich gestaltet.

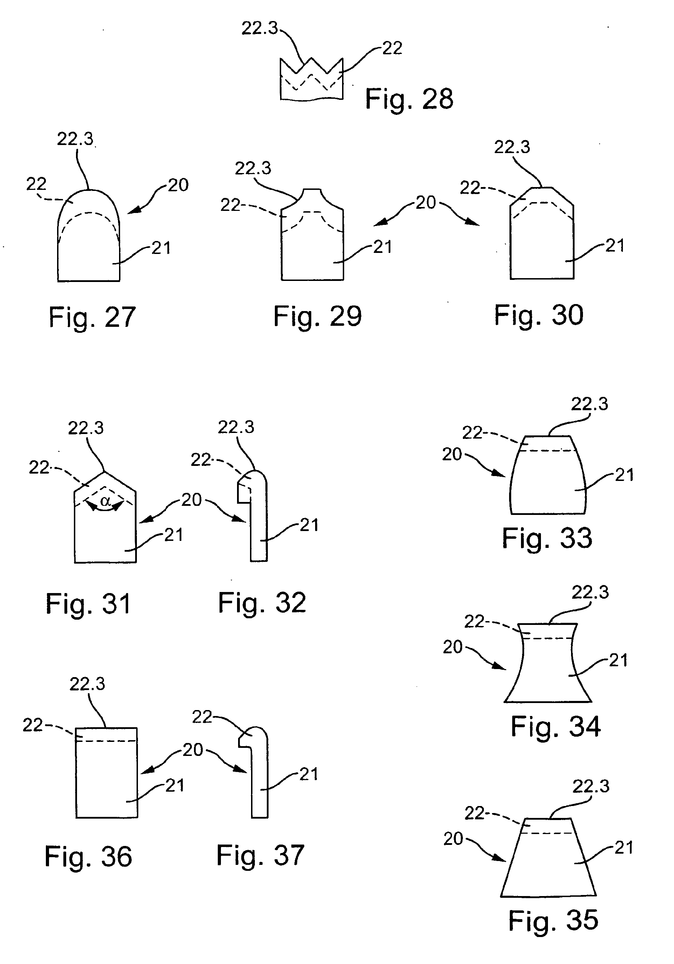

In den Figuren 27 bis 37 sind weitere Varianten von Schneidelementen 20 gezeigt, wobei diese Schneidelemente 20 jeweils in ihrer Draufsicht variierende Gestaltungen aufweisen.

Gemäß Figur 27 ist die Schneidkante 22.3 konvex gerundet. Sie kann gem. Figur 28 auch mit Zacken ausgeführt sein. Nach Figur 29 ist die Schneidkante mit zwei konkaven Bereichen ausgestattet oder nach Figur 30 polygonförmig.

Figuren 31 und 32 zeigen eine giebelartige Dachform der Schneidkante 22.3.

Die Figuren 33 bis 37 veranschaulichen, dass die seitlichen Flanken des Schneidelementes 20 konvex (Figur 33), konkav (Figur 34) oder pyramidenartig ausgebildet sein können.

Figuren 36 und 37 zeigen parallele Flanken.

## Patentansprüche

1. Bodenbearbeitungswerkzeug für eine landwirtschaftliche Maschine, insbesondere Pflugschar oder Grubberspitze mit einem Träger (10), der eine Vorderseite (11), eine Rückseite (12) und einen Ansatz (14.1) aufweist, der das freie Ende des Trägers (10) bildet, wobei der Träger (10) einen Schneidbereich (14) mit einer Schneidkante aufweist, wobei im Schneidbereich (14) ein oder mehrere Hartstoffelemente angeordnet sind,
wobei das Hartstoffelement ein Schneidelement (20) ist, das zumindest einen Teil der Schneidkante bildet und ein Befestigungsstück (21) aufweist,
**dadurch gekennzeichnet,**
**dass** das schenkelartige Befestigungsstück (21) rückseitig, entgegengesetzt zur Vorschubrichtung (v) eine Anlagefläche (21.1) aufweist, dass das Befestigungsstück (21) in Vorschubrichtung (V) gerichtet ist, dass rückseitig, abstehend ein Ansatz (22) an dem Schneidelement (20) angeformt ist. der mit einem Stützabschnitt (22.1) auf der freien Stirnseite des Ansatzes (14.1) unter Vermittlung von Lotmaterial anliegt.

2. Bodenbearbeitungswerkzeug nach Anspruch 1,
**dadurch gekennzeichnet,**
**dass** der Träger (10) im Schneidbereich (14) eine Aufnahme (14.2) aufweist, in der das Schneidelement (20) mit dem Befestigungsstück (21) stoffschlüssig festgelegt ist, und/oder
**dass** das Schneidelement (20) eine Ableitfläche (22.4) aufweist, die oberflächenbündig oder über diese vorstehend in die Vorderseite (11) des Trägers (10) übergeht.

3. Bodenbearbeitungswerkzeug nach einem der Ansprüche 1 oder 2,
**dadurch gekennzeichnet,**
**dass** das Schneidelement (20) die gerundete Schneidkante (22.3) bildet.

4. Bodenbearbeitungswerkzeug nach Anspruch 3,
**dadurch gekennzeichnet,**
**dass** der Verrundungsradius der Schneidkante (22.3) im Bereich zwischen 0,1 mm und 15 mm liegt.

5. Bodenbearbeitungswerkzeug nach einem der Ansprüche 1 bis 4,
**dadurch gekennzeichnet,**
**dass** das Schneidelement (20) entgegengesetzt zur Vorschubrichtung (V) eine gegenüber der Vorschubrichtung (V) geneigte (Neigungswinkel α) Freifläche (22.2) bildet.

6. Bodenbearbeitungswerkzeug nach Anspruch 5,
**dadurch gekennzeichnet,**
**dass** die Freifläche (22.2) im Bereich zwischen α > = 20° bis α < = 70° gegenüber der Vorschubrichtung (V) geneigt ist.

7. Bodenbearbeitungswerkzeug nach einem der Ansprüche 3 bis 6,
**dadurch gekennzeichnet,**
**dass** die gerundete Schneidkante (22.3) einen Übergang zwischen einer vorderseitigen Schneidfläche (22.4) und der rückseitigen Freifläche (22.2) bildet.

8. Bodenbearbeitungswerkzeug nach einem der Ansprüche 1 bis 7,
**dadurch gekennzeichnet,**
**dass** das Schneidelement (20) mit einem Stützabschnitt (22.1) des Ansatzes (22) auf einer Gegenfläche des Trägers (10) abgestützt ist.

9. Bodenbearbeitungswerkzeug nach einem der Ansprüche 1 bis 8,
**dadurch gekennzeichnet,**
**dass** der Träger (10) im Schneidbereich (14) eine Ausnehmung (14.2) in Form einer Ausfräsung aufweist, in der das oder die Schneidelemente (20) aufgenommen sind.

10. Bodenbearbeitungswerkzeug nach einem der Ansprüche 1 bis 9,
**dadurch gekennzeichnet,**
**dass** zwei oder mehrere Schneidelemente (20) zumindest einen Teil der Schneidkanten bilden, wobei die Schneidelemente (20) quer zur Vorschubrichtung (V) nebeneinander angeordnet sind.

11. Bodenbearbeitungswerkzeug nach einem der Ansprüche 1 bis 10,
**dadurch gekennzeichnet,**
**dass** im Bereich der Vorderseite des Trägers (10) eine oder mehrere Hartstoffabdeckungen (30) angeordnet sind.

12. Bodenbearbeitungswerkzeug nach Anspruch 11,
**dadurch gekennzeichnet,**
**dass** die Hartstoffabdeckungen (30) in Ausnehmungen (15) des Trägers (10) eingesetzt sind.

13. Bodenbearbeitungswerkzeug nach einem der Ansprüche 1 bis 12,
**dadurch gekennzeichnet,**
**dass** die Schneidelemente (20) einen Mittenabschnitt (M) und daran seitlich beidseitig anschließende Seitenansätze (S) aufweist, wobei die Anschlussbereiche Formwerkzeug-Trennebenen bilden.

## Claims

1. Soil cultivation tool for an agricultural machine, in particular a ploughshare or chisel plough tip with a carrier (10) having a front (11), a back (12) and a projection (14.1), which forms the free end of the carrier (10), whereby the carrier (10) has a cutting region (14) with a cutting edge, and whereby one or several hard material elements are arranged in the cutting region (14),
whereby the hard material element is a cutting element (20) which forms at least a part of the cutting edge and has a fixing piece (21),
**characterised in that**
the leg-like fixing piece (21) has a contact surface (21.1) at the back, opposite to the feed direction (V), whereby the fixing piece (21) is directed in the feed direction (V), and whereby at the rear there is a projection (22) formed to the cutting element (20), which rests on the free end face of the projection (14.1) with a supporting part (22.1) through the intermediary of solder material.

2. Soil cultivation tool according to claim 1, **characterised in that**
the carrier (10) in the cutting region (14) has a recess (14.2), in which the cutting element (20) with the fixing piece (21) is firmly fixed, and/or
the cutting element (20) has a deflection surface (22.4), which becomes flush with the surface or passes above this at the front side (11) of the carrier (10).

3. Soil cultivation tool according to claim 1 or 2, **characterised in that**
the cutting element (20) forms the rounded cutting edge (22.3).

4. Soil cultivation tool according to claim 3, **characterised in that**
the rounding radius of the cutting edge (22.3) is in the range between 0.1 mm and 15 mm.

5. Soil cultivation tool according to any one of the claims 1 to 4, **characterised in that**
the cutting element (20) opposite to the feed direction (V) forms an inclined (angle of inclination α) free surface (22.2) with respect to the feed direction (V).

6. Soil cultivation tool according to claim 5, **characterised in that**
the free surface (22.2) is inclined in the range between a > = 20° to a < = 70° with respect to the feed direction (V).

7. Soil cultivation tool according to any one of the claims 3 to 6, **characterised in that**
the rounded cutting edge (22.3) forms a transition between a front cutting face (22.4) and the rear free surface (22.2).

8. Soil cultivation tool according to any one of the claims 1 to 7, **characterised in that**
the cutting element (20) is supported by a supporting part (22.1) of the projection (22) on an opposite surface of the carrier (10).

9. Soil cultivation tool according to any one of the claims 1 to 8, **characterised in that**
the carrier (10) has a recess (14.2) in the cutting area (14) in the form of a milled-out portion in which the one or more cutting elements (20) are received.

10. Soil cultivation tool according to any one of the claims 1 to 9, **characterised in that**
two or more cutting elements (20) form at least a part of the cutting edges, whereby the cutting elements (20) are arranged side by side laterally to the feed direction (V).

11. Soil cultivation tool according to any one of the claims 1 to 10, **characterised in that**
one or several hard material covers (30) are arranged in the region of the front of the carrier (10).

12. Soil cultivation tool according to claim 11, **characterised in that**
the hard material covers (30) are inserted in recesses (15) of the carrier (10).

13. Soil cultivation tool according to any one of the claims 1 to 12, **characterised in that**
the cutting elements (20) have a middle section (M) and associated side projections (S) laterally on both sides, whereby the connection areas form parting planes of a forming tool.

## Revendications

1. Outil de travail du sol pour une machine agricole, en particulier soc de charrue ou soc de cultivateur, comportant un support (10) qui possède une face avant (11), une face arrière (12) et un bec (14.1) qui forme l'extrémité libre du support (10), ledit support (10) comportant une zone de coupe (14) avec une arête de coupe, un ou plusieurs éléments en carbure étant disposés dans la zone de coupe (14),
l'élément en carbure étant un élément de coupe (20), qui forme au moins une portion de l'arête de coupe et comporte un tronçon de fixation (21),
**caractérisé en ce que**
le tronçon de fixation (21) en forme de branche comporte sur sa face arrière, en sens opposé au sens d'avance (V), une surface de contact (21.1), **en ce que** le tronçon de fixation (21) est orienté dans le sens d'avance (V), **en ce que** sur la face arrière, un bec (22) est formé en saillie sur l'élément de coupe (20), lequel est en appui avec une portion d'appui (22.1) sur la face frontale libre du bec (14.1) moyennant l'utilisation d'un matériau de brasage.

2. Outil de travail du sol selon la revendication 1, **caractérisé en ce que** le support (10) comporte, dans la zone de coupe (14), un logement (14.2) dans lequel est fixé par conjugaison de matière l'élément de coupe (20) avec le tronçon de fixation (21), et/ou **en ce que** l'élément de coupe (20) comporte une surface de déviation (22.4) qui se prolonge dans la face avant (11) du support (10), à fleur ou en saillie de celle-ci.

3. Outil de travail du sol selon la revendication 1 ou 2, **caractérisé en ce que** l'élément de coupe (20) forme l'arête de coupe (22.3) arrondie.

4. Outil de travail du sol selon la revendication 3, **caractérisé en ce que** le rayon d'arrondi de l'arête de coupe (22.3) se situe dans la plage entre 0,1 mm et 15 mm.

5. Outil de travail du sol selon l'une quelconque des revendications 1 à 4, **caractérisé en ce que** l'élément de coupe (20) comporte une surface libre (22.2) qui est inclinée (angle d'inclinaison α) par rapport au sens d'avance (V) dans le sens opposé au sens d'avance (V).

6. Outil de travail du sol selon la revendication 5, **caractérisé en ce que** la surface libre (22.2) est inclinée par rapport au sens d'avance (V) dans une plage entre α ≥ 20° et α ≤ 70°.

7. Outil de travail du sol selon l'une quelconque des revendications 3 à 6, **caractérisé en ce que** l'arête de coupe (22.3) arrondie forme une transition entre une surface de coupe (22.4) avant et la surface libre (22.2) arrière.

8. Outil de travail du sol selon l'une quelconque des revendications 1 à 7, **caractérisé en ce que** l'élément de coupe (20) est en appui avec une portion d'appui (22.1) du bec (22) sur une contre-surface du support (10).

9. Outil de travail du sol selon l'une quelconque des revendications 1 à 8, **caractérisé en ce que** le support (10) comporte dans la zone de coupe (14) un évidement (14.2) en forme de creux fraisé, dans lequel est/sont reçu(s) le/les éléments de coupe (20).

10. Outil de travail du sol selon l'une quelconque des revendications 1 à 9, **caractérisé en ce que** deux ou plusieurs éléments de coupe (20) forment au moins une partie des arêtes de coupe, lesdits éléments de coupe (20) étant disposés les uns à côté des autres transversalement au sens d'avance (V).

11. Outil de travail du sol selon l'une quelconque des revendications 1 à 10, **caractérisé en ce que** dans la zone de la face avant du support (10) est/sont disposée(s) une ou plusieurs protections en carbure (30).

12. Outil de travail du sol selon la revendication 11, **caractérisé en ce que** les protections en carbure (30) sont insérées dans des évidements (15) du support (10).

13. Outil de travail du sol selon l'une quelconque des revendications 1 à 12, **caractérisé en ce que** les éléments de coupe (20) comportent une partie médiane (M) et des saillies latérales (S) raccordées latéralement des deux côtés, les zones de raccordement formant les plans de joint d'un moule.
